# EUROPÄISCHE PATENTSCHRIFT

(11) **EP 1 231 821 B1**
(45) Veröffentlichungstag und Bekanntmachung des Hinweises auf die Patenterteilung: **04.08.2004**
(21) Anmeldenummer: 02001286.0
(22) Anmeldetag: 17.01.2002
(51) Int. Cl.: H05B 41/282

(54) **Vorschaltgerät zum Betrieb von elektrischen Lampen**
Ballast for electrical lamps
Ballast pour lampes électriques

(30) Priorität: 09.02.2001 DE 10106438
(43) Veröffentlichungstag der Anmeldung: 14.08.2002
(73) Patentinhaber: Patent-Treuhand-Gesellschaft für elektrische Glühlampen mbH, 81543 München (DE)
(72) Erfinder: Huber, Andreas, 83301 Traunreut (DE); Niedermaier, Martin, 84524 Neuötting (DE)

(56) Entgegenhaltungen:
- EP-A- 0 338 109
- EP-A- 0 439 240
- EP-A- 0 564 895
- PATENT ABSTRACTS OF JAPAN vol. 1998, no. 10, 31. August 1998 (1998-08-31) & JP 10 144488 A (MATSUSHITA ELECTRIC WORKS LTD), 29. Mai 1998 (1998-05-29)

## Beschreibung

Die Erfindung betrifft ein Vorschaltgerät zum Betrieb von elektrischen Lampen gemäß dem Oberbegriff des Patentanspruchs 1.

### I. Technisches Gebiet

Insbesondere betrifft die Erfindung ein modernes elektronisches Vorschaltgerät zum Betrieb von elektrischen Lampen, das neben einem Wechselrichter und seiner Steuervorrichtung auch einen Mikrocontroller zur Überwachung und Steuerung der Funktionen des Vorschaltgerätes und der daran betriebenen Lampen aufweist. Der Mikrocontroller ermöglicht außerdem eine bidirektionale Kommunikation mit einer außerhalb des Vorschaltgerätes angeordneten zentralen Steuereinheit, die zur zentralen Regelung bzw. Steuerung einer, üblicherweise mehrere Leuchten und damit auch mehrere Vorschaltgeräte umfassenden Beleuchtungsanlage eines Raumes dient.

### II. Stand der Technik

Die europäische Offenlegungsschrift EP 0 564 895 A1 beschreibt ein elektronisches Vorschaltgerät für den Betrieb von Niederdruckgasentladungslampen. Dieses Vorschaltgerät besitzt einen Wechselrichter, eine Gleichspannungsversorgungsschaltung für den Wechselrichter, einen an den Wechselrichter angeschlossenen Lastkreis zur Spannungsversorgung einer elektrischen Lampe und eine Einrichtung zur Spannungsversorgung der Steuerschaltung des Wechselrichters. Wie bereits oben erwähnt wurde, weisen moderne elektronische Vorschaltgeräte zusätzlich zur Steuerschaltung des Wechselrichters einen Mikrocontroller, der zur Überwachung sowie Steuerung des Betriebs des Vorschaltgerätes und der daran angeschlossenen Lampen dient und eine bidirektionale Kommunikation mit einer außerhalb des Vorschaltgerätes angeordneten Steuereinheit ermöglicht. Der Mikrocontroller benötigt für diese Aufgaben eine ständige Spannungsversorgung, die auch im sogenannten Stand-by-Betrieb des Vorschaltgerätes funktioniert, das heißt insbesondere, den Mikrocontroller bei ausgeschalteten Lampen und deaktiviertem Wechselrichter noch in ausreichendem Maße mit elektrischer Energie versorgt. Die in der Offenlegungsschrift EP 0 564 895 A1 offenbarte Einrichtung zur Spannungsversorgung der Steuervorrichtung des Wechselrichters ist für diesen Zweck ungeeignet. Die Offenlegungsschrift EP-A-0,439,240 offenbart ein EVG mit einem Gleichspannungswandler als versorgungs für die IC PWM steuerung.

### III. Darstellung der Erfindung

Es ist die Aufgabe der Erfindung, für ein gattungsgemäßes Vorschaltgerät zum Betrieb von elektrischen Lampen eine verbesserte Spannungsversorgung für den Mikrocontroller bereitzustellen, die einerseits insbesondere auch im Stand-by-Betrieb des Vorschaltgerätes den Mikrocontroller zuverlässig mit elektrischer Energie versorgt und die andererseits eine möglichst geringe Verlustleistung verursacht.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Das erfindungsgemäße Vorschaltgerät weist einen Wechselrichter, eine Gleichspannungsversorgungsschaltung für den Wechselrichter, einen an den Wechselrichter angeschlossenen Lastkreis zur Spannungsversorgung einer oder mehrerer elektrischer Lampen, einen Mikrocontroller zur Überwachung und Steuerung des Betriebs des Vorschaltgerätes bzw. der Lampen und eine Spannungsversorgungseinrichtung für den Mikrocontroller auf. Erfindungsgemäß ist die Spannungsversorgungseinrichtung des Mikrocontrollers als Gleichspannungswandler ausgebildet, dessen Spannungseingang an den Spannungsausgang der Gleichspannungsversorgungsschaltung des Wechselrichters angeschlossen ist und dessen Spannungsausgang an Versorgungsspannungseingang des Mikrocontrollers angeschlossen ist. Der Gleichspannungswandler ermöglicht es, die Versorgungsspannung für den Mikrocontroller unmittelbar aus der von der Gleichspannungsversorgungsschaltung gleichgerichteten Netzwechselspannung zu erzeugen und zwar unabhängig von dem Betriebszustand des Wechselrichters und der Lampen. Außerdem kann die elektrische Leistungsaufnahme des Vorschaltgerätes im Stand-by-Betrieb auf ungefähr 0,5 W gesenkt werden.

Vorteilhafterweise ist der Spannungsausgang des Gleichspannungswandlers zusätzlich auch an den Versorgungsspannungseingang der Steuervorrichtung für die Wechselrichterschaltmittel angeschlossen. Die Bauteile des Gleichspannungswandlers sind vorteilhafterweise derart dimensioniert, dass an seinem Spannungsausgang eine ausreichend hohe Spannung sowohl zur Versorgung des Mikrocontrollers als auch der Steuervorrichtung des Wechselrichters verfügbar ist. Der Gleichspannungswandler kann daher zusätzlich auch zur Spannungsversorgung dieser Steuervorrichtung genutzt werden. Der Gleichspannungswandler weist vorteilhafterweise einen Tiefsetzsteller auf oder ist als Tiefsetzsteller ausgebildet, weil mit Hilfe eines Tiefsetzstellers auf einfache Weise und mit relativ geringer Verlustleistung aus der vergleichsweise hohen Ausgangsspannung der Gleichspannungsversorgungsschaltung eine Niedervoltgleichspannung wie sie zum Betrieb des Mikrocontrollers benötigt wird, generierbar ist. Der Spannungsausgang des Tiefsetzstellers wird vorteilhafterweise von einem Elektrolytkondensator gebildet, um für eine kurze Zeitspanne von beispielsweise 200 ms einen ausreichend hohen Versorgungsstrom von beispielsweise 5 mA für die Steuervorrichtung des Wechselrichters verfügbar machen zu können. Das Schaltmittel des Tiefsetzstellers und die Regelvorrichtung zur Regelung seiner Schaltvorgänge sind vorteilhafterweise als Integrierter Schaltkreis ausgebildet. Dadurch wird eine platzsparende Anordnung des Tiefsetzstellers bzw. der Einrichtung zur Spannungsversorgung des Mikrocontrollers ermöglicht. Insbesondere können die wesentlichen Komponenten des Tiefsetzstellers, das heißt, das Schaltmittel und seine Regelvorrichtung, in die als ASIC (Anwenderspezifischer Integrierter Schaltkreis) ausgebildete Steuervorrichtung des Wechselrichters integriert werden. Um den Spannungsabfall am Spannungsausgang des Tiefsetzstellers auf den gewünschten Wert einstellen zu können, sind Mittel zum zeitweiligen Unterbrechen der Schaltvorgänge des Schaltmittels des Tiefsetzstellers vorgesehen. Diese Mittel umfassen vorteilhafterweise einen Schwellwertschalter, der in einem Rückkopplungszweig zur Regelvorrichtung des Tiefsetzstellers angeordnet ist. Mit Hilfe des Schwellwertschalters kann auf einfache Weise der Spannungsabfall am Spannungsausgang des Tiefsetzstellers überwacht werden und die Regelvorrichtung für den Tiefsetzsteller zeitweilig deaktiviert bzw. aktiviert werden. Als Schwellwertschalter eignet sich besonders gut eine Zenerdiode, durch deren Dimensionierung und evtl. mit Hilfe eines geeignet dimensionierten zusätzlichen Spannungsteilers die Ausgangsspannung des Tiefsetzstellers auf den gewünschten Wert einstellbar ist. Der vorgenannte Rückkopplungszweig ist vorteilhafterweise mittels eines Optokopplers von dem Source-Potential galvanisch getrennt, um einen Einfluss des sich ständig ändernden Source-Potentials auf die Schaltvorgänge des Tiefsetzstellerschaltmittels auszuschließen. Um eine Funkstörung durch den Tiefsetzsteller zu vermeiden, ist der Tiefsetzsteller vorteilhafterweise mit Funkentstörmitteln ausgestattet. Als Funkentstörmittel werden vorteilhafterweise eine Kleinsignaldiode und ein Widerstand eingesetzt, wobei die Anode der Diode mit der Tiefsetzstellerdrossel und ihre Kathode mit dem positiven Pol des Gleichspannungsausgang des Tiefsetzstellers verbunden ist und der Widerstand so angeordnet ist, dass ein Anschluss mit der Anode der Kleinsignaldiode und der Tiefsetzstellerdrossel und der andere Anschluss mit dem Massepotential verbunden ist. Durch die Kleinsignaldiode, die nur eine sehr geringe Sperrschichtkapazität besitzt, wird die Tiefsetzstellerdrossel am Ende ihres Entladevorgangs gesperrt und der Widerstand dämpft die noch verbleibende Eigenschwingung der Schaltung, die sich bei jedem Übergang der Tiefsetzstellerdiode vom leitenden in den sperrenden Zustand ausbildet.

### IV. Beschreibung des bevorzugten Ausführungsbeispiels

Nachstehend wird die Erfindung anhand eines bevorzugten Ausführungsbeispiels näher erläutert. Es zeigen:
- Figur 1: Ein Blockschaltbild des erfindungsgemäßen Vorschaltgerätes
- Figur 2: Eine schematische Darstellung des Tiefsetzstellers des in Figur 1 abgebildeten Vorschaltgerätes
- Figur 3: Details des Tiefsetzstellers des in Figur 1 abgebildeten Vorschaltgerätes

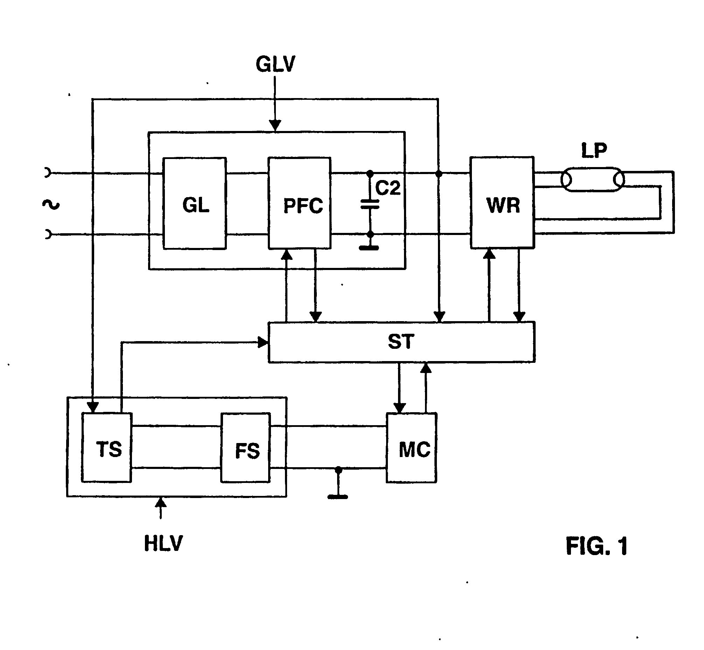

In Figur 1 ist ein bevorzugtes Ausführungsbeispiel der Erfindung schematisch, in Form eines Blockschaltbildes dargestellt. Wesentlicher Bestandteil dieses Vorschaltgerätes ist ein Wechselrichter WR, insbesondere ein Halbbrückenwechselrichter, zum Betreiben mindestens einer Niederdruckgasentladungslampe LP, insbesondere einer Leuchtstofflampe. Der Halbbrückenwechselrichter WR wird von der Gleichspannungsversorgungsschaltung GLV gespeist, die aus der Netzwechselspannung eine Gleichspannung von ca. 400 V bis 450 V generiert. Die Gleichspannungsversorgungsschaltung GLV weist zu diesem Zweck ein mit den Netzspannungsanschlüssen verbundenes Modul GL, das aus einem Funkentstörfilter und einem nachgeschalteten Brückengleichrichter GL besteht, und einen an den Gleichspannungsausgang des Moduls GL angeschlossenen Hochsetzsteller PFC auf. Der Hochsetzsteller PFC dient zur Leistungsfaktorkorrektur und ermöglicht eine annähernd sinusförmige Netzstromentnahme. Der Spannungsausgang des Hochsetzstellers bzw. der Gleichspannungsversorgungsschaltung GLV wird von dem Zwischenkreiskondensator C2 gebildet. An dem als Elektrolytkondensator ausgebildeten Zwischenkreiskondensator C2 wird die Versorgungsspannung für den Wechselrichter WR bereitgestellt. Die Steuervorrichtung ST enthält im wesentlichen Treiberschaltungen zur Ansteuerung der Schalttransistoren des Halbbrückenwechselrichters WR und des Hochsetzstellers PFC. Sie ist üblicherweise als Anwenderspezifischer Integrierter Schaltkreis, als sogenannter ASIC ausgebildet. Zusätzlich weist das Vorschaltgerät einen Mikrocontroller MC auf, der Steuersignale für die Treiberschaltungen der Steuervorrichtung ST zur Ansteuerung der Schalttransistoren des Wechselrichters WR und des Hochsetzstellers PFC generiert und der zur Überwachung der Betriebszustände des Hochsetzstellers PFC, des Wechselrichters WR und der mindestens einen Lampe LP dient. Der Mikrocontroller MC ist ferner über Schnittstellen (nicht abgebildet) mit einer außerhalb des Vorschaltgerätes angeordneten zentralen Steuereinheit (nicht abgebildet) verbindbar, die zur zentralen Steuerung der Funktionen der kompletten Beleuchtungsanlage dient, von der das erfindungsgemäße Vorschaltgerät eine Komponente darstellt. Über diese Schnittstellen erhält der Mikrocontroller bzw. das Vorschaltgerät von der zentralen Steuereinheit Steuerbefehle zum Ein-/ Ausschalten und zur Helligkeitsregelung der mindestens eine Lampe LP. Außerdem werden über diese Schnittstellen Informationen über die Betriebszustände des Vorschaltgerätes oder der mindestens einen Lampe LP an die zentrale Steuereinheit weitergeleitet. Zur Spannungsversorgung des Mikrocontrollers MC dient die als Gleichspannungswandler ausgebildete Spannungsversorgungseinrichtung HLV. Der Spannungseingang des Gleichspannungswandlers HLV ist mit dem Zwischenkreiskondensator C2 bzw. mit dem Spannungsausgang der Gleichspannungsversorgungsschaltung GLV verbunden. Ein erster Spannungsausgang des Gleichspannungswandlers HLV ist mit dem Versorgungsspannungseingang des Mikrocontroller MC und ein zweiter Spannungsausgang des Gleichspannungswandlers HLV ist mit dem Versorgungsspannungseingang der Steuervorrichtung ST verbunden. Der Gleichspannungswandler HLV erzeugt aus der am Zwischenkreiskondensator C2 bereitgestellten Gleichspannung eine an Gleichspannung von ca. 5 V für den Mikrocontroller MC und eine Gleichspannung von mindestens 12 V zur Spannungsversorgung der Steuervorrichtung ST. Der Gleichspannungswandler HLV enthält zu diesem Zweck einen Tiefsetzsteller TS und einen nachgeschalteten Festspannungsregler FS, der die Ausgangsspannung des Tiefsetzstellers TS auf einen Wert von ca. 5 V für den Mikrocontroller MC herunterregelt. Der Gleichspannungswandler HLV versorgt den Mikrocontroller MC, unabhängig von dem Betriebszustand des Wechselrichters WR und des Hochsetzstellers PFC, mit elektrischer Energie. Selbst im Stand-By-Modus des Vorschaltgerätes, wenn der Wechselrichter WR und der Hochsetzsteller PFC deaktiviert sind, erzeugt der Gleichspannungswandler HLV eine Versorgungsspannung von ca. 5 V für den Mikrocontroller MC. In diesem Fall liegt an dem Zwischenkreiskondensator C2 die von dem Modul GL gleichgerichtete Netzwechselspannung als Eingangsspannung für den Gleichspannungswandler HLV an.

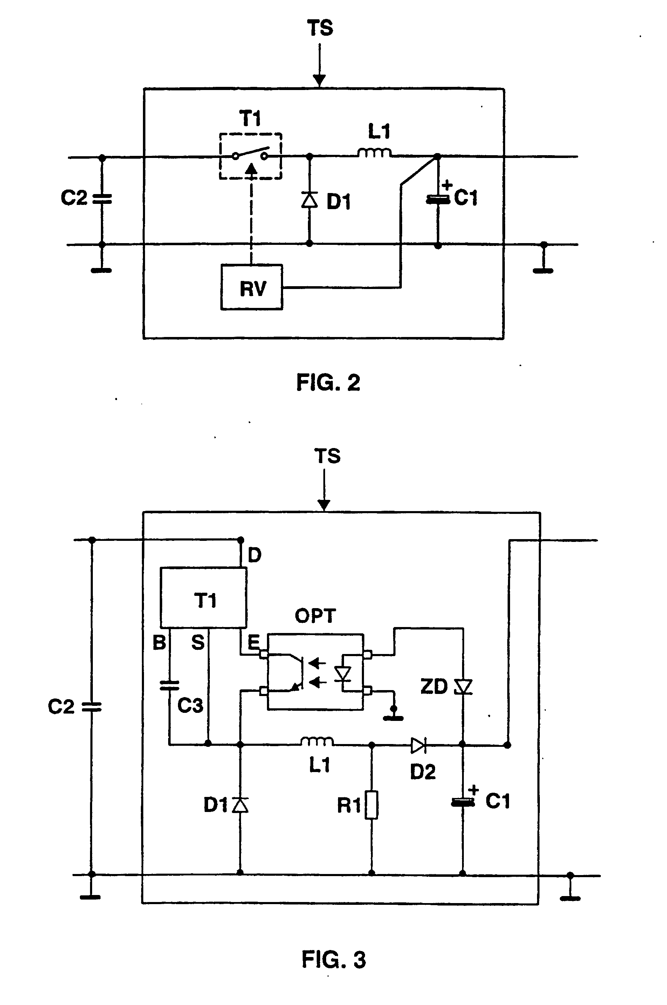

In Figur 2 ist der Tiefsetzsteller TS des Gleichspannungswandlers HLV schematisch dargestellt. Der Spannungseingang des Tiefsetzstellers TS ist mit dem Zwischenkreiskondensator C2 verbunden. Der Spannungsabfall am Kondensator C2 dient daher als Eingangsspannung für den Tiefsetzsteller TS. Der Tiefsetzsteller TS besitzt das Schaltmittel T1, die Regelungsvorrichtung RV zur Regelung der Schaltvorgänge des Schaltmittels T1, die Tiefsetzstellerdrossel L1, die Diode D1 und den Elektrolytkondensator C1. Der Elektrolytkondensator C1 bildet den Spannungsausgang des Tiefsetzstellers TS. Die Regelungsvorrichtung ist über einen Rückkopplungszweig mit dem Kondensator C1 verbunden, um den Spannungsabfall am Kondensator C1 zu überwachen und in Abhängigkeit davon die Schaltvorgänge des Schaltmittels T1 zu steuern. Während der Schalter T1 eingeschaltet ist, wird der Kondensator C1 über die Drossel L1 von der am Kondensator C2 verfügbaren, gleichgerichteten Netzwechselspannung aufgeladen. In der Drossel L1 baut sich gleichzeitig ein Magnetfeld auf. Die Diode D1 befindet sich im sperrenden Zustand. Während der Sperrphase des Schalters T1 wird die im Magnetfeld der Drossel L1 gespeicherte Energie abgebaut und an den Kondensator C1 abgegeben. Der Kondensator C1 wird in diesem Fall mittels der Drossel L1 nachgeladen. Die Diode D1 befindet sich währenddessen im leitenden Zustand. Die am Elektrolytkondensator C1 verfügbare Versorgungsspannung für den Festspannungsregler FS und für die Steuervorrichtung ST hängt von dem Schalttakt des Schaltmittels T1 ab.

Einzelheiten des Tiefsetzstellers TS des Gleichspannungswandlers HLV sind in der Figur 3 abgebildet. Als Schaltmittel T1 wird der als Integrierter Schaltkreis ausgebildete und im Handel unter der Bezeichnung TNY 253 bekannte Schaltregler verwendet. Die Regelungsvorrichtung RV ist in dem Schaltregler T1 integriert. Der Drain-Anschluss D des Schaltreglers T1 ist mit dem positiven Pol des Kondensators C2 verbunden. Der Source-Anschluss S des Schaltreglers T1 ist über die Tiefsetzstellerdrossel L1 und die in Vorwärtsrichtung gepolte Diode D2 mit dem positiven Pol des Elektrolytkondensators C1 verbunden. Außerdem ist der Source-Anschluß S mit der Kathode der Diode D1 verbunden, deren Anode an das schaltungsinterne Massepotential angeschlossen ist. An den Enable-Anschluss E des Schaltreglers T1 ist der Rückkopplungszweig zum Kondensator C1 angeschlossen. Der Rückkopplungszweig enthält die in Rückwärtsrichtung gepolte Zenerdiode ZD und den Optokoppler OPT. An den Bypass-Anschluss B des Schaltreglers T1 ist der Kondensator C3 angeschlossen, der zur Stabilisierung der Versorgungsspannung des Schaltreglers T1 gegenüber der Source-Spannung dient. Außerdem weist der Tiefsetzsteller TS den Widerstand R1 auf, zusammen mit der Diode D2 zur Funkentstörung des Tiefsetzstellers TS dient. Ein Anschluss des Widerstands R1 ist mit der Anode der Diode D2 und mit der Drossel L1 verbunden, während der andere Anschluss des Widerstands R2 mit dem Massepotential verbunden ist.

Der in Figur 3 abgebildete Schaltregler T1 enthält einen Oszillator, der das im Schaltregler T1 vorhandene Schaltmittel in einem vorgegebenen Schalttakt fortwährend ein- und ausschaltet. Dadurch wird die Verbindung zwischen dem Drain D und der Source S des Schaltreglers T1, ähnlich wie bei den Schaltvorgängen eines Feldeffekttransistors, ständig unterbrochen bzw. hergestellt. Bei elektrisch leitender Drain-Source-Strecke des Schaltreglers T1 wird der Kondensator C1 über die Drossel L1 und die in Vorwärtsrichtung gepolte Kleinsignaldiode D2 aus der am Kondensator C2 verfügbaren Versorgungsspannung aufgeladen. In der Drossel L1 baut sich währenddessen ein Magnetfeld auf und die Diode D1 ist gesperrt. Während der Sperrphase der Drain-Source-Strecke des Schaltreglers T1 wird die im Magnetfeld der Drossel L1 gespeicherte elektrische Energie abgebaut und zum Nachladen des Kondensators C1 verwendet. Der Ladestrom für den Kondensator C1 fließt in diesem Fall über die Diode D1. Die am Kondensator C1 zur Spannungsversorgung der Steuervorrichtung ST und des Mikrocontrollers MC verfügbare Spannung ist durch den Schalttakt des Schaltreglers T1 bestimmt. Mit Hilfe des bereits oben erwähnten Rückkopplungszweiges wird der Schalttakt des Schaltreglers T1 und damit der Spannungsabfall am Kondesator C1 gesteuert. Erreicht der Spannungsabfall am Kondensator C1 die Schwellenspannung der Zenerdiode D1, so wird diese leitfähig und die Leuchtdiode des Optokopplers beginnt zu leuchten. Dadurch erhält der Enable-Anschluss E des Schaltreglers T1 ein Eingangssignal, das die Regelungsvorrichtung für die Schaltvorgänge des Schaltmittels des Schaltreglers T1 deaktiviert. Die Drain-Source-Verbindung bleibt daher unterbrochen, solange wie das Eingangssignal am Enable-Anschluss E anliegt und der Kondensator C1 wird deshalb nicht mehr nachgeladen. Sobald der Spannungsabfall am Kondensator C1 wieder die Schwellenspannung der Zenerdiode ZD unterschreitet, geht die Zenerdiode ZD in den sperrenden Zustand und das Eingangssignal am Enable-Anschluss E des Schaltreglers T1 verschwindet. Die Regelungsvorrichtung im Schaltregler T1 zur Regelung seines Schaltmittels wird dadurch wieder aktiviert und die Schaltvorgänge des Schaltmittels werden wieder fortgesetzt. Entsprechend wird auch der Kondensator C1 wieder nachgeladen. Durch geeignete Dimensionierung der Schwellenspannung der Zenerdiode ZD kann die Ausgangsspannung am Kondensator C1 des Tiefsetzstellers TS auf den gewünschten Wert eingestellt werden. Um sowohl die Steuervorrichtung ST als auch den Mikrocontroller MC ausreichend mit elektrischer Energie versorgen zu können, wird am Kondensator C1 eine Spannung von ca. 28 V generiert. Mit Hilfe des nachgeschalteten Festspannungsreglers FS wird daraus eine Versorgungsspannung von 5 V für den Mikrocontroller MC und mit Hilfe eines Zweipunktreglers oder eines Spannungsteilers eine Versorgungsspannung von ungefähr 12 V für die Steuervorrichtung ST generiert.

Wie bereits oben erwähnt wurde, dienen die Bauteile D2 und R1 zur Funkentstörung des Tiefsetzstellers TS. Bedingt durch die Induktivität der Drossel L1 und die Kapazität des Kondensators C1 sowie die Sperrschichtkapazität der Diode D1 bildet sich ohne die Bauteile R1, D2 beim Übergang der Diode D1 vom leitenden in den sperrenden Zustand eine Eigenschwingung aus, die zu Funkstörungen führt. Die Kleinsignaldiode D2 wird am Ende des Entladevorgangs der Drossel L1, das heißt, nachdem die im Magnetfeld der Drossel L1 gespeicherte Energie abgebaut ist, gesperrt. Eine Rückübertragung der im elektrischen Feld des Kondensators C1 gespeicherte elektrische Energie an die Drossel L1 wird dadurch verhindert. Der Widerstand R1 dämpft den noch verbleibenden Rest der Eigenschwingung.

Die Erfindung beschränkt sich nicht auf das oben näher erläuterte Ausführungsbeispiel. Beispielsweise kann die Versorgungsspannung für den Spannungswandler HLV auch direkt aus der gleichgerichteten Netzwechselspannung am Gleichspannungsausgang des Gleichrichters GL gewonnen werden. Es ist nicht erforderlich, die Ausgangsspannung des Hochsetzstellers PFC zu verwenden. Außerdem kann der Gleichspannungswandler auch ausschließlich zur Spannungsversorgung des Mikrocontrollers MC eingesetzt werden. In diesem Fall kann die Versorgungsspannung für den Mikrocontroller MC auch ohne Festspannungsregler FS direkt an dem Kondensator C1, das heißt, am Spannungsausgang des Tiefsetzstellers TS, bereitgestellt werden. Ferner kann anstelle des Tiefsetzstellers TS auch ein anderer geeigneter Gleichspannungswandler verwendet werden.

## Patentansprüche

1. Vorschaltgerät zum Betrieb von elektrischen Lampen mit
- einem Wechselrichter (WR),
- einer Gleichspannungsversorgungsschaltung (GLV) für den Wechselrichter (WR),
- einem an den Wechselrichter (WR) angeschlossenen Lastkreis zur Spannungsversorgung einer oder mehrerer elektrischer Lampen (LP),
- einem Mikrocontroller (MC) zur Überwachung und Steuerung des Betriebs des Vorschaltgerätes,
- einer Spannungsversorgungseinrichtung (HLV) für den Mikrocontroller (MC),
**dadurch gekennzeichnet, dass** die Spannungsversorgungseinrichtung (HLV) für den Mikrocontroller (MC) einen Tiefsetzsteller (TS) aufweist, dessen Spannungseingang an den Spannungsausgang der Gleichspannungsversorgungsschaltung (GLV) angeschlossen ist und dessen Spannungsausgang an den Versorgungsspannungseingang des Mikrocontrollers (MC) angeschlossen ist.

2. Vorschaltgerät nach Anspruch 1 **dadurch gekennzeichnet, dass** der Spannungsausgang der Spannungsversorgungseinrichtung (HLV) an den Versorgungsspannungseingang einer Steuervorrichtung (ST) für die Wechselrichterschaltmittel angeschlossen ist.

3. Vorschaltgerät nach Anspruch 1, **dadurch gekennzeichnet, dass** der Spannungsausgang des Tiefsetzstellers (TS) von einem Elektrolytkondensator (C1) gebildet wird.

4. Vorschaltgerät nach Anspruch 1, **dadurch gekennzeichnet, dass** das Schaltmittel (T1) des Tiefsetzstellers (TS) und die Regelungsvorrichtung (RV) zur Regelung der Schaltvorgänge des Schaltmittels (T1) als Integrierter Schaltkreis ausgebildet sind.

5. Vorschaltgerät nach Anspruch 1, **dadurch gekennzeichnet, dass** Mittel (OPT, ZD) zum zeitweiligen Unterbrechen der Schaltvorgänge des Schaltmittels (T1) des Tiefsetzstellers (TS) vorgesehen sind.

6. Vorschaltgerät nach Anspruch 5, **dadurch gekennzeichnet, dass** die Mittel zum zeitweiligen Unterbrechen der Schaltvorgänge des Schaltmittels des Tiefsetzstellers einen Schwellwertschalter (ZD) umfassen, der in einem Rückkopplungszweig zur Regelungsvorrichtung (RV) angeordnet ist und zur Überwachung der Spannung am Spannungsausgang des Tiefsetzstellers (TS) dient.

7. Vorschaltgerät nach Anspruch 1, **dadurch gekennzeichnet, dass** der Tiefsetzsteller (TS) Funkentstörmittel (R1, D2) aufweist.

## Claims

1. Ballast for operating electric lamps, having
- an inverter (WR),
- a DC voltage supply circuit (GLV) for the inverter (WR),
- a load circuit, connected to the inverter (WR), for supplying voltage to one or more electric lamps (LP),
- a microcontroller (MC) for monitoring and controlling the operation of the ballast,
- a voltage supply device (HLV) for the microcontroller (MC),
**characterized in that** the voltage supply device (HLV) for the microcontroller (MC) has a step-down converter (TS), the voltage input of which is connected to the voltage output of the DC voltage supply circuit (GLV) and the voltage output of which is connected to the supply voltage input of the microcontroller (MC).

2. Ballast according to Claim 1, **characterized in that** the voltage output of the voltage supply device (HLV) is connected to the supply voltage input of an open-loop control device (ST) for the inverter switching means.

3. Ballast according to Claim 1, **characterized in that** the voltage output of the step-down converter (TS) is formed by an electrolytic capacitor (C1).

4. Ballast according to Claim 3, **characterized in that** the switching means (T1) of the step-down converter (TS) and the closed-loop control device (RV) for controlling the switching operations of the switching means (T1) are designed as an integrated circuit.

5. Ballast according to Claim 1, **characterized in that** means (OPT, ZD) for temporarily interrupting the switching operations of the switching means (T1) of the step-down converter (TS) are provided.

6. Ballast according to Claim 5, **characterized in that** the means for temporarily interrupting the switching operations of the switching means of the step-down converter comprise a threshold switch (ZD), which is arranged in a feedback branch to the closed-loop control device (RV) and serves for monitoring the voltage at the voltage output of the step-down converter (TS).

7. Ballast according to Claim 1, **characterized in that** the step-down converter (TS) has radio-interference suppression means (R1, D2).

## Revendications

1. Ballast pour lampes électriques, comportant
- un onduleur (WR),
- un circuit d'alimentation en tension continue (GLV) pour l'onduleur (WR),
- un circuit de charge raccordé à l'onduleur (WR) pour l'alimentation en tension d'une ou plusieurs lampes électriques (LP),
- un microcontrôleur (MC) pour la surveillance et la commande du fonctionnement du ballast,
- un dispositif d'alimentation en tension (HLV) pour le microcontrôleur (MC),
**caractérisé par le fait que** le dispositif d'alimentation en tension (HLV) pour le microcontrôleur (MC) comporte un abaisseur (TS) dont l'entrée de tension est raccordée à la sortie de tension du circuit d'alimentation en tension continue (GLV) et dont la sortie de tension est raccordée à l'entrée de tension d'alimentation du microcontrôleur (MC).

2. Ballast selon la revendication 1, **caractérisé par le fait que** la sortie de tension du dispositif d'alimentation en tension (HLV) est raccordée à l'entrée de tension d'alimentation d'un dispositif de commande (ST) pour le dispositif commutateur d'onduleur.

3. Ballast selon la revendication 1, **caractérisé par le fait que** la sortie de tension de l'abaisseur (TS) est formée par un condensateur électrochimique (C1).

4. Ballast selon la revendication 1, **caractérisé par le fait que** le dispositif commutateur (T1) de l'abaisseur (TS) et le dispositif de régulation (RV) pour la régulation des opérations de commutation du dispositif commutateur (T1) sont conçus comme un circuit intégré.

5. Ballast selon la revendication 1, **caractérisé par le fait que** des moyens (OPT, ZD) sont prévus pour l'interruption temporaire des opérations de commutation du dispositif commutateur (T1) de l'abaisseur (TS).

6. Ballast selon la revendication 5, **caractérisé par le fait que** les moyens pour l'interruption temporaire des opérations de commutation du dispositif commutateur de l'abaisseur comprennent un commutateur à valeur de seuil (ZD) qui est placé dans une branche de rétroaction vers le dispositif de régulation (RV) et qui sert à la surveillance de la tension à la sortie de tension de l'abaisseur (TS).

7. Ballast selon la revendication 1, **caractérisé par le fait que** l'abaisseur (TS) comporte des moyens d'antiparasitage (R1, D2).
